# EUROPEAN PATENT APPLICATION

(11) **EP 1 275 461 A1**
(43) Date of publication of application: **15.01.2003**
(21) Application number: 02250158.9
(22) Date of filing: 10.01.2002
(51) Int. Cl.: B23K 1/00, B23K 1/012, B23K 3/02, B23K 3/04

(54) **Brazing method and device, relay coil and method for the coil by the brazing method and device**

(30) Priority: 11.07.2001 JP 2001210682; 02.10.2001 JP 2001306892
(71) Applicant: Taga Manufacturing Co., Ltd., 14-1, Oume-shi, Tokyo (JP)
(72) Inventor: Nakaya, Yutaka, Hachiouji-shi, Tokyo (JP)
(74) Representative: Rees, Alexander Ellison

(57) **Abstract**

A minute work piece (W) in various mechanical or electric component parts is securely brazed by shooting a thin gas flame (F) toward the work piece at a pinpoint while supplying a thread of soldering metal (B) straight to the work piece to heat the work piece and melt the soldering metal, thereby to braze the soldering metal to the work piece. The pinpoint brazing method and device makes it possible to form reliable connection between the conductive terminal (230) of a relay coil and a lead wire (Wb; 222) wound on a coil bobbin (210) through a sphere-shaped soldering metal (B). The relay coil thus produced by the brazing method is suitably applicable to various kinds of machinery bringing about vibration, such as automobiles.

## Description

This invention relates to method and device for pinpoint brazing various works, and further to a method for producing a relay coil by the pinpoint brazing method for connecting minute coil terminals of the coil.

### 2. Description of the Prior Art:

As a technique for connecting minute objects such as of various work pieces, there has been known soldering so called a microsoldering method. However, environmental pollution due to venenosity of lead contained in factory wastes occurs a serious problem. Under these circumstances, a need has been felt for new jointing technique in place of the conventional soldering.

Welding such as arc welding and laser welding is substituted in place of the aforesaid soldering, but it is not useful for jointing pinpoints of the small objects and restricted in material of the objects to be jointed. Thus, the conventional welding is awkward to operate in jointing minute work pieces.

There has been proposed a connection structure for connecting minute parts such as of electronic devices by soldering (Japanese Patent Application Public Disclosure No. 2000-223169(A)).

The conventional soldering as proposed comprises placing a sheet- or foil-like soldering metal such as gold solder, silver solder and copper solder onto or between objects to be joined, and heating the soldering metal to melt by a laser.

According to the conventional soldering, since the sheet-like or foil like soldering metal is used, a joining area to which the soldering metal is placed must be secured on the object, though it is small. Consequently, the conventional soldering has entailed a disadvantage such that a pinpoint soldering could not be fulfilled.

In processing minute parts such as electric or electronic component parts, it is required to make joining areas small, and besides, secure precision and reliability of the joining portions.

To cite one example, soldering is applied for connecting the terminal end of a lead wire constituting a relay coil to a terminal of the coil to be assembled in a load controlling or signal switching circuit of an electric or electronic device.

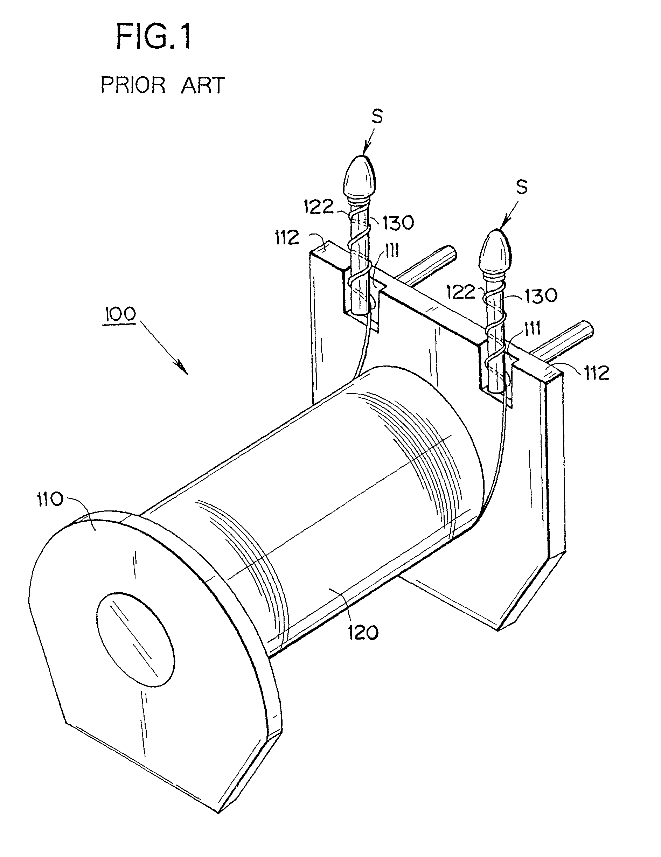

By way of example, a common relay coil 100 is illustrated in FIG. 1. The relay coil 100 comprises a coil 120 formed by winding a coated lead wire 122 around a coil bobbin 110, and lead terminals 130 formed on both side portions 112 of the coil bobbin 110. The coated lead wire 122 comprises a core wire 122a and a covering 122b and has terminal ends twined some turns around the tip portions 131 of the lead terminals 130.

In securing the lead wires of the relay coil to the terminals of the relay coil, there may be utilized dip soldering as disclosed in Japanese Patent Application Public Disclosure HEI 08-215836(A). That is, the proposed dip soldering is practiced by applying flux to the terminal 130 of the relay coil 100 and the coated lead wire 122 twined around the terminal 130, and immersing the terminal 130 with the lead wire 122 in a soldering bath containing melted solder.

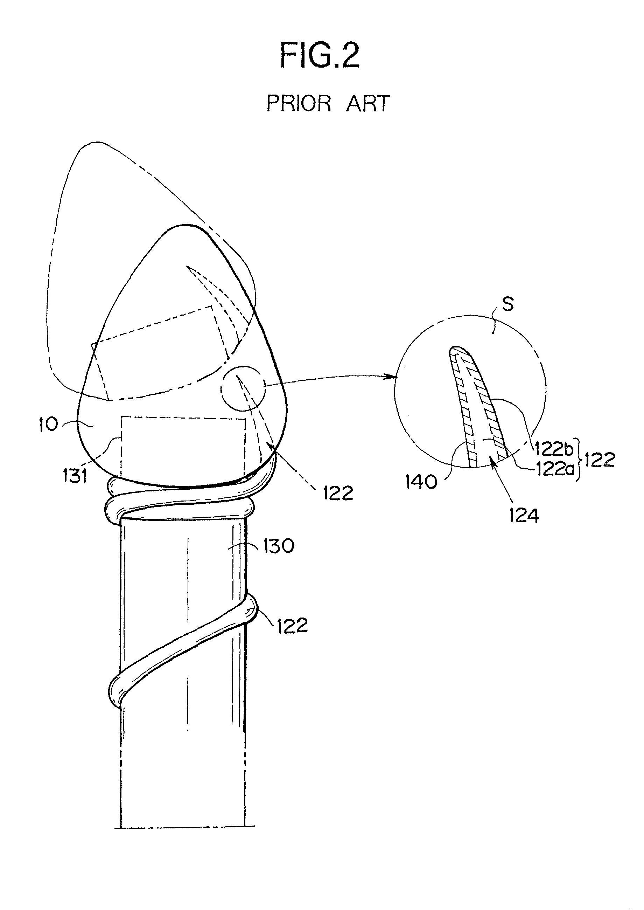

However, the prior art dip soldering is disadvantageous in that the high-temperature melted solder in the soldering bath melts not only the covering 122b at tip end portion of the lead wire 122, but also the core wire 122a. Consequently, since the tip end portion 124 of the lead wire 122 melts into thin as shown in FIG. 2, it disadvantageously turns out to be connected to the terminal 130 with low strength. Moreover, when the lead wire and the terminal is heated at high temperature in the soldering bath, an oxide layer 140 serving as a barrier is formed between the melted solder S and lead wire 122 as shown in FIG. 2, resulting in incomplete connection between the lead wire and the terminal. As a result, in case where the relay coil is mounted on a device which vibrates in operation, the lead wire 122 will easily come off during vibration.

Generally, the solder melts at a relative low temperature about 330°C. Thus, when the relay coil 100 is used in, for example, an engine room of an automobile, which generates superheat, the lead wire 122 soldered to the relay coil easily comes off due to vibration, shock and high temperature.

Furthermore, the moment the flux applied to the joint portion of the lead wire and terminal is immersed into the melted solder in the soldering bath, small particles of melted solder are scattered around from the soldering bath, consequently to contaminating the coil and bobbin with the melted solder scattered. The melted solder scattered around in the form of particles possibly soaks into the relay coil, resulting in failure of electrical continuity between the lead wire and terminal.

Under the circumstances, there has recently been a great need for method and device capable of pinpoint brazing various small work pieces, and small-sized electric or electronic component parts such as an undersized relay coil produced by the brazing method and device.

The present invention seeks to provide a method and device capable of pinpoint brazing minute connecting portions of various works, producing a reliable connection structure.

The present invention also seeks to provide a method and device for brazing minute work pieces by using pinpointed torch flame with a high accuracy while keeping watch on a joining position with a monitor camera so as to automatically adjust the joining position.

The present invention also seeks to provide a relay coil having an excellently reliable and strong connection structure between lead wires and terminals of the coil, which is formed with a high accuracy by using a method and device capable of pinpoint brazing.

The present invention also seeks to provide a relay coil having excellent performance, durability and high strength withstanding vibration and high temperature, and a method for producing the relay coil with high efficiency.

The present invention also seeks to provide a method capable of producing the relay coil without contaminating the coil with melted solder so as to prevent incomplete connection.

According to the present invention, there is provided a brazing method comprising placing a work piece and a gas torch at prescribed working positions, shooting a thin gas flame from the gas torch toward the work piece at a pinpoint, and supplying a thread of soldering metal straight to the work piece while heating the work piece with the gas flame to melt the soldering metal, thereby to braze the soldering metal to the work piece.

Further, according to the present invention, there is provided a brazing device comprising a holder for supporting a work piece, a gas torch for shooting out a thin gas flame to the work piece to heat the work piece at a pinpoint, and a solder supplying mechanism for supplying and moving a thread of soldering metal to and fro relative to the work piece.

A relay coil produced by using the brazing device according to the present invention comprises a coated lead wire wound on a bobbin and having wire end portions twined round terminals provided on the bobbin, which wire end portions are brazed to the respective terminals by pinpoint shooting a thin gas flame from a gas torch toward each of the terminals, and supplying a thread of soldering metal straight to the respective terminals while heating the terminals with the gas flame to melt the soldering metal.

As the soldering metal for use in the present invention, there may be used silver solder and nonleaded solder. The soldering metal brazed to the connected lead wire and terminal at a pinpoint assumes the shape of a substantially sphere.

According to the method of the invention, the pinpoint brazing can be fulfilled by using a thin gas flame shot out from the gas torch. The thread of soldering metal is supplied straight to the joint portion of the work piece at a regular speed.

In shooting out the gas flame from the gas torch toward the work piece, it is desirable to blow inert gas against the work piece to be jointed. With the inert gas, the heat caused on the work piece by the gas flame is taken out from the portion which need not heat up.

The brazing device of the invention further comprises a mechanism for moving the gas torch to adjust the positional relation between the work piece and the gas torch held by the holder, a monitor camera for measuring the positions of the work piece and the gas torch, a controller linked to the moving mechanism, solder supplying mechanism and monitor camera. With the controller for controlling the moving mechanism, the positional error between the work piece and torch can be corrected.

The brazing device of the invention may be provided with an oxygen-hydrogen generator for generating oxygen and hydrogen, and a mixer for mixing the oxygen and hydrogen fed from the oxygen-hydrogen generator with methyl alcohol vapor.

With the monitor camera, growth of solder sphere formed at a pinpointed portion of the work piece can be observed. According to this observation system with the monitor camera, adequate formation of the solder hardened on the work piece can be obtained by comparing the measured data obtained by monitoring the solder grown on the work piece with predetermined data.

The brazing device of the invention may be provided with a gas nozzle for directing the inert gas toward the basal portion of the work piece to which the gas flame is shot out from the gas torch. The basal portion of the work piece, which is not required to heat, is cooled with the inert gas discharged from the gas nozzle.

According to the brazing method of the present invention, terminal ends of a coated lead wire in a relay coil can be securely connected with terminals of the relay coil. In brazing the coated lead wire to the terminal of the relay coil, coating of the coated lead wire is destroyed in a relative short time by heat of the flame shot out from the gas torch, thus to prevent contamination.

One way of carrying out the invention is described in detail below with reference to drawings which illustrate only one specific embodiment, in which:-
FIG. 1 is an enlarged perspective view showing a coil relay produced by a prior art brazing method.
FIG. 2 is a partially enlarged view showing the terminal end of a prior art relay coil produced by the conventional brazing method of FIG. 1.
FIG. 3 is a schematic diagram showing one embodiment of a brazing device according to the present invention.
FIG. 4 is an explanatory diagram showing a control system of the brazing device of FIG. 3.
FIG. 5(A) and FIG. 5(B) are enlarged perspective views showing the operation of the principal part of the brazing device of FIG. 3.
FIG. 6(A) and FIG. 6(B) are enlarged perspective views showing the operation of the principal part of the brazing device of FIG. 3.
FIG. 7 is a perspective view showing one example of a blazed portion of a work piece formed by using the blazing device of the invention.
FIG. 8 is a flowchart of the processes of blazing the work piece illustrated in FIG. 3 and FIG. 4.
FIG. 9 is a perspective view showing the principal portion of a second embodiment of the blazing device according to the present invention.
FIG. 10 is a side view showing the principal portion of a third embodiment of the blazing device according to the present invention.
FIG. 11 is an enlarged perspective view showing one example of the relay coil produced by the blazing method of the present invention.

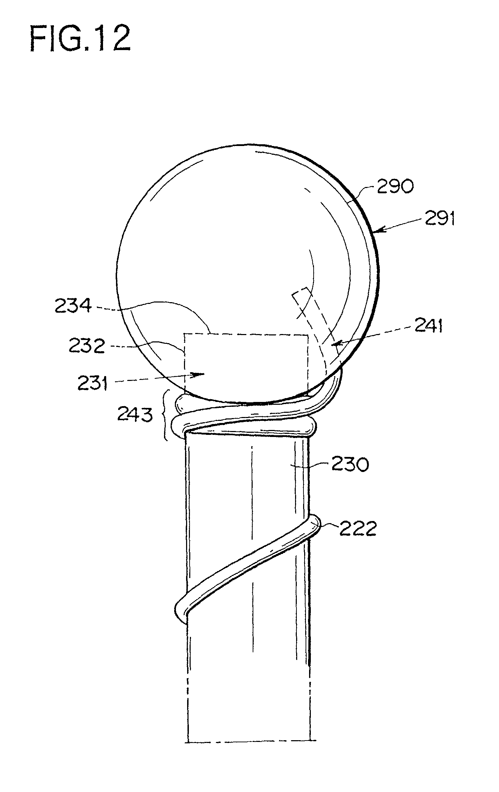

FIG. 12 is an enlarged view showing the terminal end of the relay coil of FIG. 11.
FIG. 13 is a transversal cross-section showing the terminal of the relay coil shown in FIG. 11.
FIG. 14 is a longitudinal cross-section showing the terminal of the relay coil shown in FIG. 11.
FIG. 15 is an explanatory view showing the blazing device of the invention for brazing the principal portion of the relay coil shown in FIG. 11.
FIG. 16 is an enlarged perspective view showing the blazing device of the invention for brazing the principal portion of the relay coil illustrated in FIG. 11.

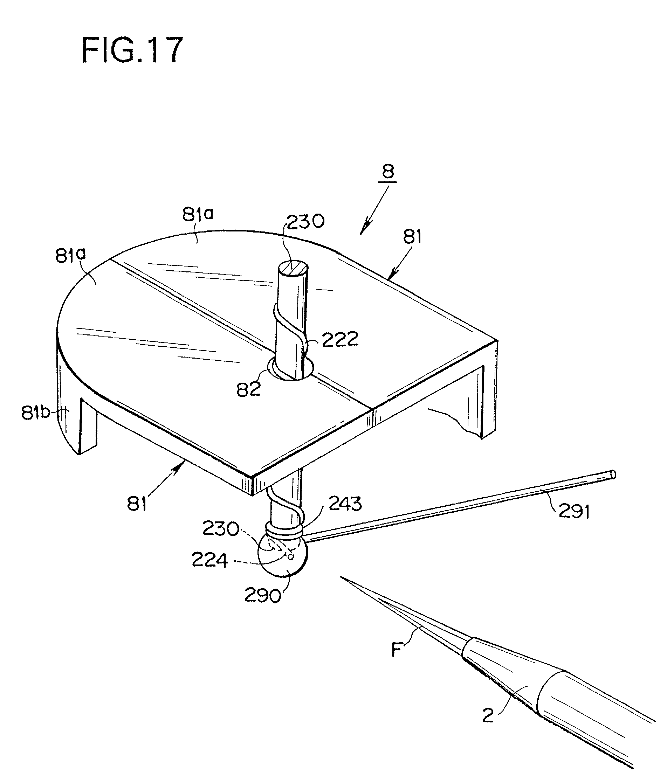

FIG. 17 is an enlarged perspective view showing the blazing device of the invention for brazing the principal portion of the relay coil illustrated in FIG. 11.

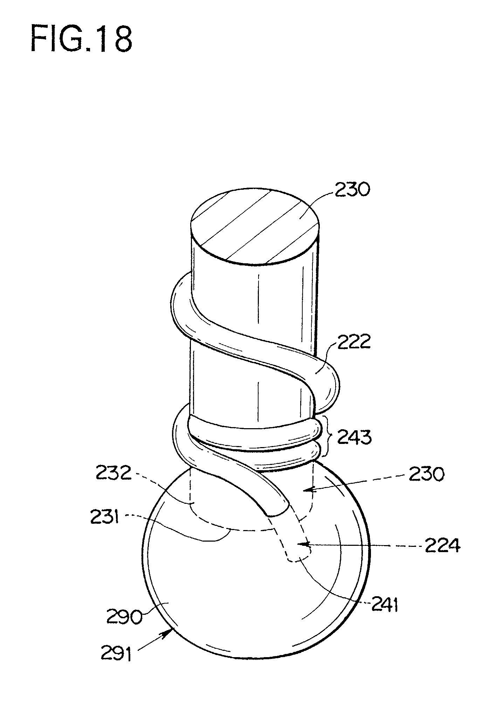

FIG. 18 is a perspective view of the finished blazed terminal of the relay coil shown in FIG. 11.

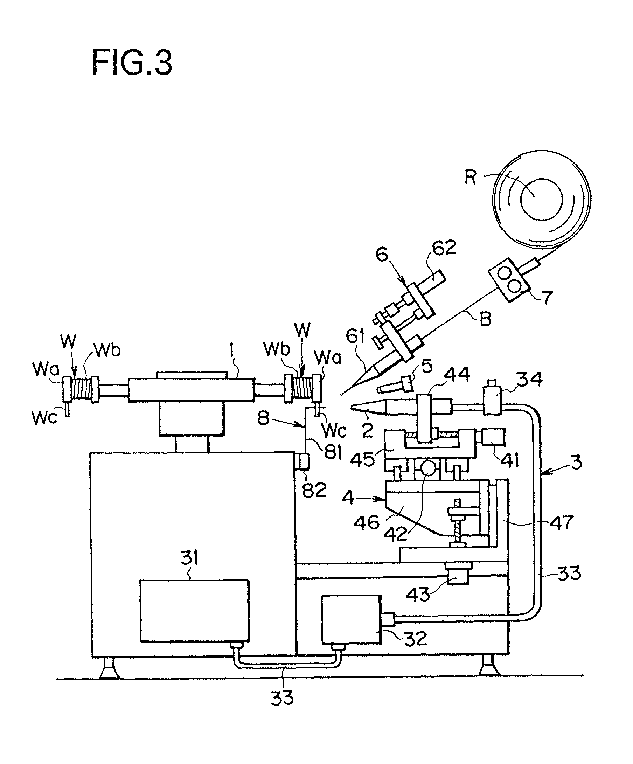

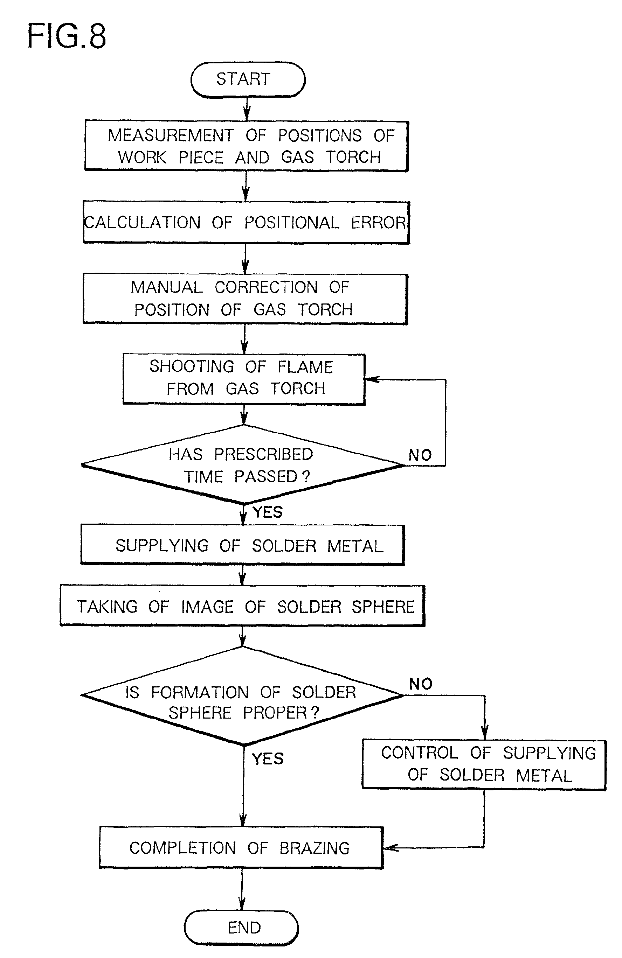

One preferred embodiment of the blazing method and device according to the present invention will be described hereinafter with reference to the accompanying drawings. FIG. 3 through FIG. 8 show the first embodiment of the blazing method and device of the invention.

In the illustrated embodiment, a small coil is processed as a work piece W. The work piece W, i.e. the relay coil, has a coated lead wire Wb wound on a bobbin Wa. First, both terminal ends (leading end and tail end) Wd of the lead wire Wb are twined round pin-like terminals Wc.

The blazing device of this embodiment comprises a holder 1, gas torch 2, gas supplying system 3, moving mechanism 4, monitor camera 5, solder supplying mechanism 6, solder feeding device 7, heat shielding member 8, and controller 9.

The holder 1 is provided for supporting the work piece (relay coil) W at a prescribed working position. The brazing object (part of the work piece W) is held vertically by seizing the bobbin Wa so as to direct the pin-like terminal downward. The holder 1 has another function of supplying and removing the brazing object relative to the prescribed working position in conjunction with a coil winding system and an inspecting system.

The gas torch 2 shoots out thin flame F toward the pin-like terminal Wc of the brazing object held by the holder 1 to heat the pin-like terminal Wc round which the terminal end Wd is twined. The flame F shot out from the gas torch 2 is formed by combustion of hydrogen gas or the like directed straight to the terminal end Wd through the agency of combustion chip. The target to which the flame F is directed is disposed on the lower portion of the pin-like terminal Wc of the brazing object.

The gas supplying system 3 for feeding gas belonging to a hydrogen group to the gas torch 2 comprises an oxygen-hydrogen generator 31 for generating oxygen and hydrogen, a mixer 32 for mixing the oxygen and hydrogen fed from the oxygen-hydrogen generator 31 with methyl alcohol vapor, pipes 33 for connecting the torch 2, oxygen-hydrogen generator 31 and mixer 32, and an electromagnetic valve 34 disposed on the pipe 33 between the mixer 32 and the torch 2.

The oxygen-hydrogen generator 31 yields the hydrogen and oxygen by electrolysis caused by mixing potassium hydroxide solution with water (distilled water, refined water, etc.) Thus, this oxygen-hydrogen generator 31 can dispense with hydrogen and oxygen bottles, thus alleviating the danger in handling combustion gas.

The mixer 32 serves to effect the reduction of the hydrogen gas by the addition of the methyl alcohol vapor and suppress superheat caused by the frame F from the gas torch 2. Consequently, blazing according to the invention can be practiced without flux, so as not to melt the brazing object excessively.

The electromagnetic valve 34 has function of opening and closing the passage of the combustion gas and regulating the flow of the combustion gas.

The moving mechanism 4 has a three-dimensional moving mechanism consisting of X-axis motor 41, y-axis motor 42, z-axis motor 43, torch holder 44, y-axis moving table 45, z-axis moving table 46, and support base 47, so that the positional relation between the lower end of the pin-like brazing object Wc (part of the work piece W) and the front end of the gas torch 2 can be adjusted.

With the monitor camera 5, the relative position between the lower end of the pin-like brazing object Wc and the front end of the gas torch 2 is measured. In this embodiment, the monitor camera 5 is a small-sized CCD camera capable of picking up images of the work piece and gas torch with high resolution. The three-dimensional data may be obtained by using a plurality of monitor cameras for composing images or exchangeable filters for a single camera.

The solder supplying mechanism 6 comprises of a nozzle 61 from which a thread of soldering metal B is fed out, and a cylinder 62 for moving the nozzle 61 forward and backward.

In this embodiment, the soldering metal B is silver solder made of silver and copper alloy and formed like a thread. The thread of soldering metal B is wound on a solder roll R. The soldering metal B may optionally be made of phosphorus or libethenite according to the material of the brazing object.

The solder feeding device 7 for sending the soldering metal from the solder roll R to the solder supplying mechanism 6. The thread of soldering metal B which is fed from the solder roll R to the solder supplying mechanism 7 through the solder feeding device 7 is continuously sent out from the nozzle 61 of the solder supplying mechanism 6 toward the lower end portion Wc of the pin-like brazing object.

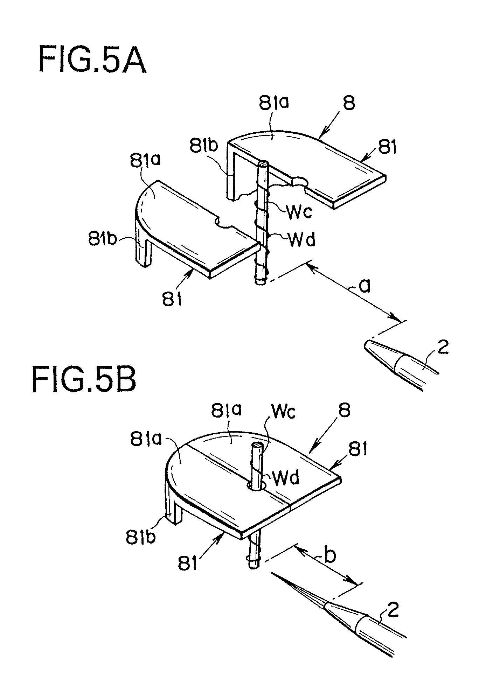

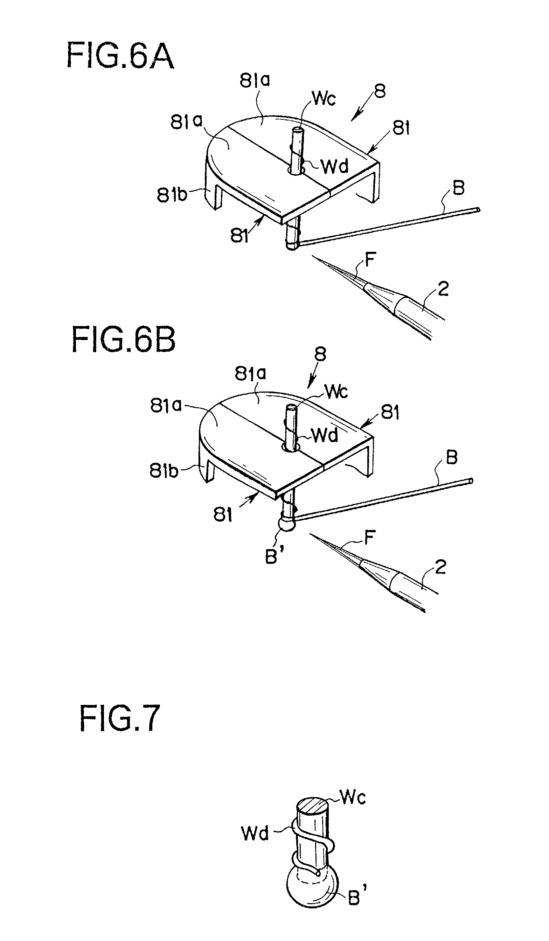

The heat shielding member 8 for protecting peripheral members from the heat of the flame F shot out from the gas torch 2 comprises thermal insulating halves 81 made of ceramic, which move in opposite directions to open or close as shown in FIGS. 5 and 6, and a driving device 82 including a servo motor or the like for opening or closing the thermal insulating halves 81. Each thermal insulating half 81 is formed of a top plate 81a for shielding the bobbin Wa of the work piece (relay coil) W and the lead wire Wb from the flame F from the torch 2, and a side wall 81b for blocking and turning the flame F. The lower part under the top plate 81a is not completely surrounded by the side wall 81b so as not to excessively confine the heat around the brazing object to be heated.

The controller 9 has a sequencer for collectively controlling the driving system for the holder 1, oxygen-hydrogen generator 31 of the gas supply system 3, mixer 32, electromagnetic valve 34, cylinder 62 of the solder supplying mechanism, and driving system of the heat shielding member 8. To the controller 9, there are connected a control console 10, a camera controller 20 and an NC controller 30. The controller 9 further has a function of directly controlling the X-axis motor 41, Y-axis motor 42, Z-axis motor 43 and solder feeding device 7 through the NC controller 30 and servo driver 40.

Next, the controlling function and operation of the brazing device in the first embodiment of the present invention will be described.

First, the brazing object (part of the work piece W) is moved to the predetermined position by operating the holder 1.

Next, the positions of the lower end portion Wc of the pin-like brazing object supported by the holder 1 and the front end of the gas torch 2 are measured by using the monitor camera 5. By performing this measurement, the curvature of the pin-like brazing object can be detected. To be concrete, a distance a between the front end of the gas torch 2 and the brazing object, which is indicated in FIG. 5(A), is measured. The measured data obtained by the monitor camera 5 is sent to the controller 9 through a camera controller 20.

Upon reception of the measured data from the monitor camera, the controller 9 performs an arithmetic operation for comparing the measured data with a predetermined reference data to calculate the error between the front end of the gas torch 2 and the brazing object. Based on the error thus calculated, the controller 9 controls the X-axis motor 41, Y-axis motor 42, Z-axis motor 43 of the moving mechanism 4 through the NC controller 30 and servo driver 40. Consequently, the gas torch 2 is placed at a corrected adequate position distant from the object Wc by distance b as illustrated in FIG. 5(B).

Subsequently, the controller 9 issues a command to close the thermal insulating halves 81 of the heat shielding member 8.

Thereafter, under the control of the controller 9, the oxygen-hydrogen generator (O & H generator) 31 of the gas supply system 3, mixer 32, and electromagnetic valve 34 are set to operate, and the gas torch 2 shoots out flame F toward the brazing object. The magnitude of the flame F is controlled by regulating the flows of oxygen and hydrogen according to the predetermined data.

The flame F shot out from the gas torch 2 is directed to the lower end portion Wc of the pin-like brazing object to heat. Since the flame F is very thin and strikes on the brazing object at a pinpoint, only the required portion to be heated of the brazing object can be heated locally, and the other portion of the brazing object are not heated excessively. As a result, thermal deformation of the bobbin Wa of the brazing object and undesirable exfoliation, burning and melting of insulating layers of the wire Wb and terminal end Wd can be prevented. Also, the heat shielding member 8 serves to prevent excessive heating of the other portions than that required to be heated.

After a fixed period of time elapses while directing the flame F from the torch 2 toward the brazing object, the nozzle 61 of the solder supplying mechanism 6 is advanced toward the lower end portion Wc of the brazing object by driving the cylinder 62 of the solder supplying mechanism 6. Simultaneously, the thread of solder B is sent out from the nozzle 61 approaching the lower end portion Wc of the brazing object. The solder B is directed straight toward the lower end portion Wc of the brazing object by means of the solder feeding device 7. Consequently, the solder B strikes against the lower end portion Wc of the brazing object at a pinpoint, but it does not touch the other portion than that to be brazed.

The solder B fed to the lower end portion Wc of the brazing object is melted by the flame F and flows down along the pin-like brazing object until the lower end of the brazing object, consequently to be hardened in the shape of a sphere B'. That is, the lower end portion Wc and the terminal end Wd of the lead wire, which constitute the brazing object, are enclosed by the hardened solder sphere B', thus to secure the connection therebetween.

The formation of the solder sphere B' is confirmed by the monitor camera 5. The image data from the camera 5 is transferred to the controller 9 through the camera controller 20.

The controller 9 compares the image data representing the growth of the solder sphere B' made from melting solder with the reference data stored previously in the controller 9. Then, the controller 9 issues a command signal for determining the time required for supplying the soldering metal B (corresponding to the length of the soldering metal B to be supplied) to the cylinder 62 of the solder supplying mechanism 6 and the solder feeding device 7.

Upon completion of brazing with the soldering metal B supplied for a prescribed time, the controller 9 issues a converse command for reversing the solder supplying mechanism and solder feeding device. That is, the supply of the soldering metal B and shooting of the flame F from the gas torch 2 are stopped, and then, the thermal insulating halves 81 of the heat shielding member 8 are opened so that the work piece W can be released.

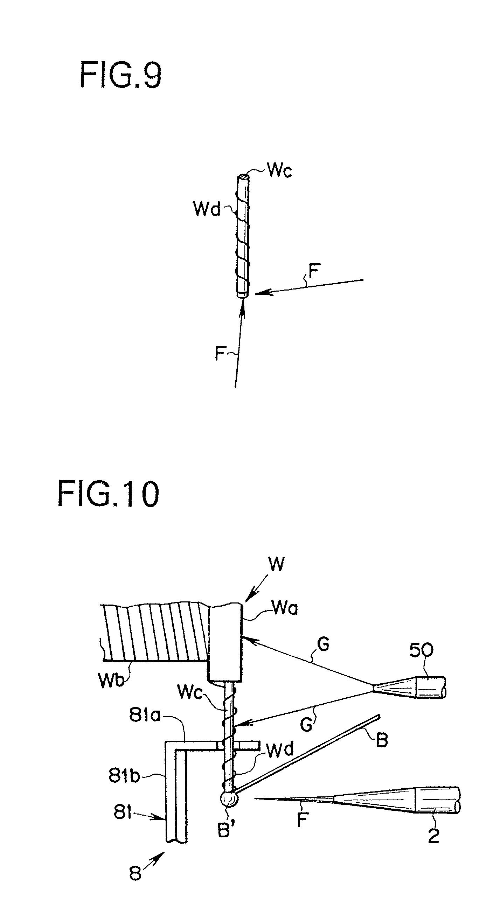

FIG. 9 shows the second embodiment illustrative of the brazing method and device of the present invention.

In the second embodiment, a plurality of flames F are directed to the lower end portion Wc of the work piece from different directions, thus preventing unevenness in heating the lower end portion Wc of the work piece W.

FIG. 10 shows the third embodiment illustrative of the brazing method and device of the present invention.

In this third embodiment, an inert gas nozzle 50 for blowing inert gas G such as nitrogen gas is located adjacent to the gas torch 2.

According to this embodiment, the inert gas G can be directed only to the portions other than the lower end portion Wc of the work piece W so as to effectively prevent thermal deformation of the bobbin Wa and exfoliation, burning and melting of the insulation coats of the coated lead wire Wb and terminal end Wd. Specifically, the inert gas having an inactive function is conveniently used for preventing the coated lead wire Wb from being burned.

The controller 9 in the brazing device of this embodiment may carry out open control in accordance with two or more sets of predetermined parameters for automatically driving the NC controller 30 and servo driver 40. It is a matter of course that the controller 9 may not be used as the case many be.

The brazing method and device have been described above on condition that the work piece to be processed is the small-sized relay coil, but this invention may of course be applied to any other objects. As is apparent from the foregoing description that the present invention makes it possible to heat a brazing object at a pinpoint and supply a thin thread of soldering metal to a pinpoint portion of the brazing object, thus to enable pinpoint brazing for very small objects or works.

Next, the relay coil produced by the brazing method and device according to the present invention will be described.

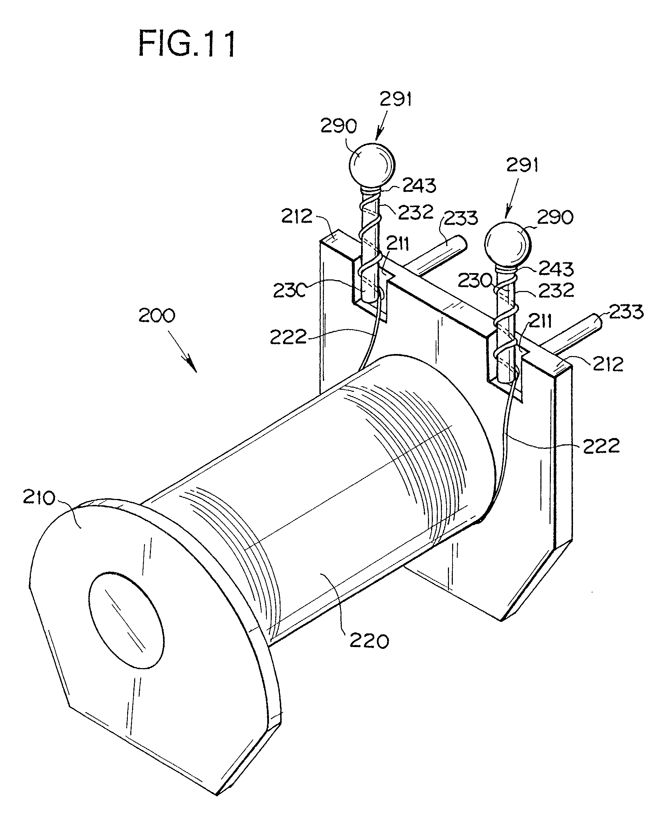

The relay coil 200 produced according to the invention comprises a coated lead wire 222 having a conductive core wire 241 coated with an insulating covering 242 around the conductive core wire, and a bobbin 210 on which the lead wire 222 is wound, as shown in FIG. 11. The bobbin 210 has conductive terminals 230 projecting from both side portions 212 thereof. Both terminal ends of the lead wire 222 are twined round the respective terminals 230 of the bobbin 210. These components of the relay coil described herein is substantially identical to that of the conventional relay coil as shown in FIGS. 1 and 2.

The relay coil 200 according to the invention has a characteristic solder sphere 290 of silver solder 291 formed at the leading end 224 of the lead wire 222 and the tip end of the terminal 230. Thus, the terminal end of the lead wire 222 and the end portion of the terminal 230 are securely united with the hardened silver solder (solder sphere 290).

The conductive terminal 230 is made of, for example, copper alloy or iron rod generally having a diameter of about 0.3 to 0.8 mm. The conductive terminal 230 is usually formed in the shape of L. The terminal 230 projects from a terminal notch 211 formed in each side portion of one bobbin frame 212. Thus, one part 232 of the L-shaped terminal 230 projects from the terminal notch 211 perpendicularly to the bobbin 210, and the other part 233 of the L-shaped terminal 230 extends outward longitudinally relative to the bobbin 210 through the bobbin frame 212. The part 232 of the terminal 230 has an end surface at the tip end 231 thereof.

The lead wire 222 constituting a coil 220 has both terminal ends 222 (leading end and tail end) twined several turns round the respective conductive terminals 230 as illustrated.

The coated lead wire is made of, for instance, an enamel wire having a small diameter of about 0.03 to 0.15 mm. The lead wire is formed of the conductive core wire 241 coated with the insulating covering 242.

The core wire 241 is generally made of copper, aluminum or the like. In the case of copper, the core wire 241 is melted at about 1000°C.

The insulating covering 242 is generally made of natural resin or synthetic resin such as epoxy resin, polyurethane. Such resin materials have small thermal resistance and are easy to fuse at a temperature at which the solder is melted.

Thus, when the leading end 224 of the lead wire 222 is heated at a high temperature, only the covering 242 is burned down to expose the core wire. Consequently, the lead wire 222 twined round the terminal 230 is ultimately composed of the conductive core wire 241.

A wire dense part 243 close to the tip end 231 of the terminal 230 is dense with the bare lead wire 222, i.e. only the core wire 241, wound around the terminal 230.

The silver solder 291 forming the solder sphere 290 at the tip end 231 of the terminal 230 is made of silver-copper alloy containing flux having an anti-oxidizing action.

The solder sphere 290 covers the wire dense part 243 at the tip end 231 of the conductive terminal 230 and the leading end portion of the lead wire 222.

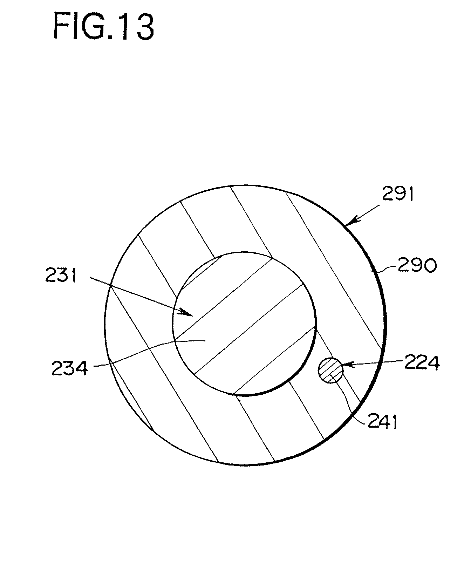

FIG. 13 illustrates the inner structure of the solder sphere 290. Since no oxide layer nor space is formed between the conductive terminal 230 and

silver solder 291, the terminal 230 and the silver solder 291 are in intimate contact with each other in the state that the tip end portion 231 of the conductive terminal 230 is embraced in the silver solder 291. Thus, the terminal 230 and the silver solder 291 are steadily united with each other.

Also, the leading end portion 224 of the lead wire 222 is embraced in the silver solder 291. Since the covering 242 is removed from the leading end portion 224 of the lead wire 222, the core wire 241 of the lead wire 222 is in intimate contact with the silver solder 291 without forming an oxide layer or space between the core wire 241 and the silver solder 291.

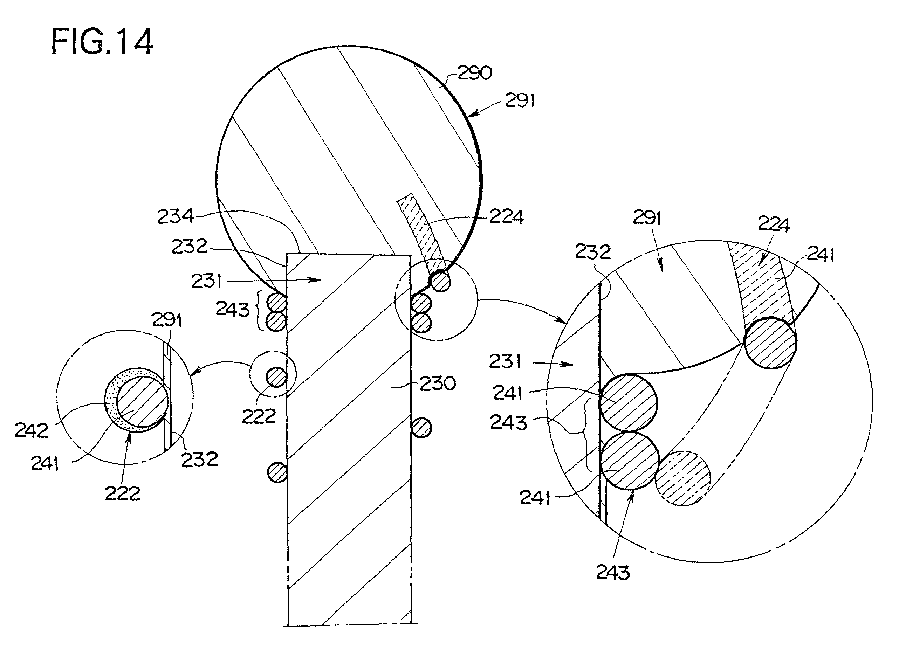

The bare core wire 241 at the leading end portion 224 of the lead wire 222 extends deep inside the solder sphere 290 of the silver solder 291 as shown in FIG. 14, so as to prevent breakaway of the lead wire 222 from the silver solder 291.

Thus, the tip end portion 231 of the conductive terminal 230 and the leading end portion 224 of the lead wire 222 are in physically intimate connection with each other through the silver solder 291. Consequently, an electrical connection between the terminal 230 and the lead wire 222 is established assuredly through the silver solder 291.

The silver solder 291 has a relatively high melting point of about 700°C and has strong associative strength, high anti-vibration and heat-resistant properties and excellent electric conductivity. Therefore, the relay coil having the terminal structure secured by the silver solder according to the present invention is very durable, and thus, suitably applicable to various kinds of machinery bringing about vibration, such as automobiles.

Next, the method for producing the relay coil having the lead wire 222 securely united with the terminal 230 through the soldering metal according to the present invention will be described in the concrete.

First, the brazing device for embodying the method for producing the relay coil as described above according to the invention will be explained.

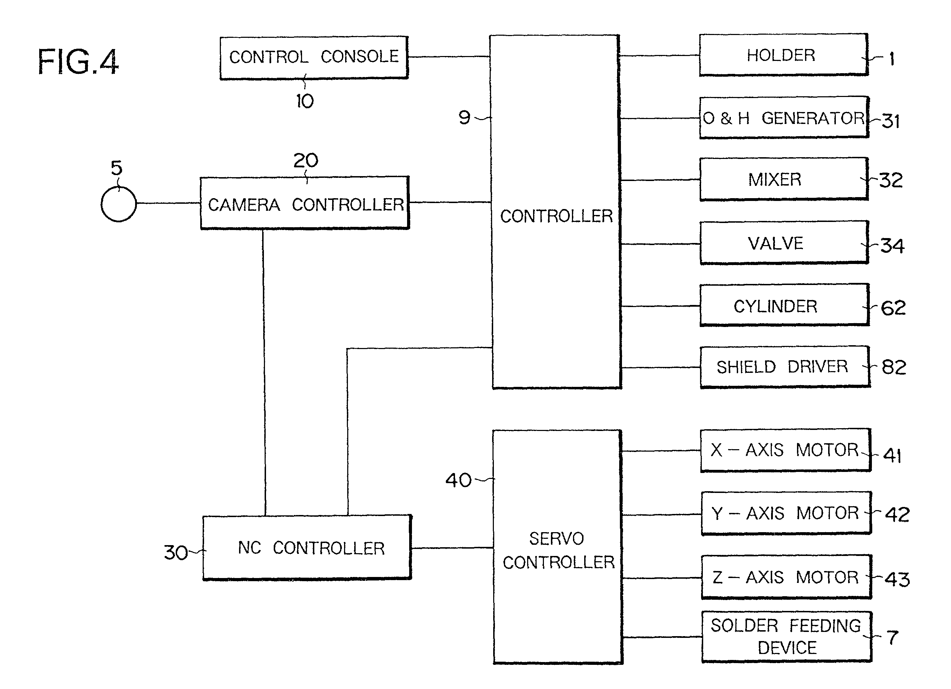

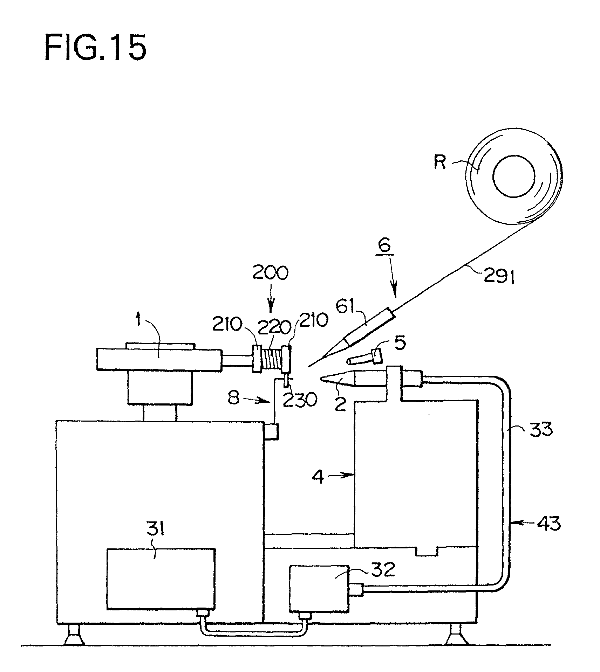

The brazing device for producing the relay coil of the invention is schematically illustrated in FIG. 15. The brazing device in this illustrated embodiment is basically identical with the first embodiment shown in FIG. 3. That is, as shown in FIG. 15, the brazing device in this embodiment comprises the holder 1 for supporting the relay coil 200 in the state that the tip end 231 of the conductive terminal 230 is directed downward, the gas torch 2 for shooting out a thin gas flame F, the gas supplying system 3 for feeding hydrogen gas or other combustion gas to the gas torch 2, the moving mechanism 4 for adjusting the positions of the torch 2 relative to the tip end 231 of the conductive terminal 230, the camera 5 for detecting the positions of the tip end 231 of the terminal 230 and the front end of the gas torch 2, the solder supplying mechanism 6 for supplying the silver solder 291 wound on the solder roll R straight to the work piece, the heat shielding member 8 for protecting peripheral members from the heat of the flame F shot out from the gas torch 2, and the controller 9 (FIG. 4).

The gas supplying system 3 in the illustrated embodiment comprises the oxygen-hydrogen generator 31 for generating oxygen and hydrogen, the mixer 32 for mixing the oxygen and hydrogen fed from the oxygen-hydrogen generator 31 with methyl alcohol vapor, pipes 33 for connecting the torch 2, oxygen-hydrogen generator 31 and mixer 32, and the electromagnetic valve 34 disposed on the pipe 33 between the mixer 32 and the torch 2.

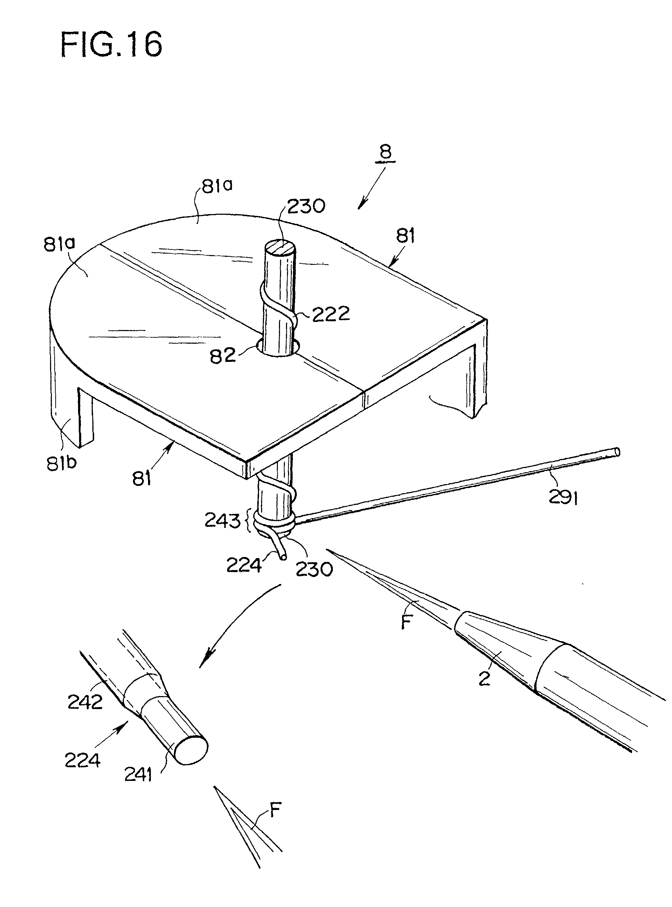

As shown in FIG. 16, the heat shielding member 8 for protecting peripheral members from the heat of the flame F shot out from the gas torch 2 comprises the thermal insulating halves 81 made of ceramic and the driving device 82 including the servo motor or the like for opening or closing the thermal insulating halves 81. Each thermal insulating half 81 is formed of the top plate 81a for shielding the bobbin Wa of the work piece (relay coil) W and the lead wire Wb from the flame F from the torch 2, and the side wall 81b for blocking and turning the flame F. The lower part under the top plate 81a is not completely surrounded by the side wall 81b so as not to excessively confine the heat around the brazing object to be heated.

The aforesaid brazing device of the invention is controlled by the controller 9 including integrated sequencers.

Next, there will be described the method for producing the relay coil 200 by using the aforenoted brazing device. Specifically, an explanation about the method for connecting the leading end 224 of the coated lead wire 222 to the tip end portion 231 of the terminal 230 of the relay coil will be made.

The relay coil 200 is held vertically by seizing the bobbin Wa so as to direct the tip end portion 231 of the terminal 230 downward. That is, the terminal 230 is inserted through a round hole 82 bored in the heat shielding member 8 and then heated by the thin gas flame F shot out from the gas torch 2 at a pinpoint at a temperature for melting the soldering metal (silver solder) 291, as shown in FIG. 19. At this time, the covering 242 of the coated lead wire 222 twined round the terminal 230 is burned down to expose the core wire 241. Thus, only the bare core wire 241 is securely united to the tip end portion 231 of the terminal 230 with the melted silver solder 291.

The wire dense part 243 close to the tip end 231 of the terminal 230 is dense with the bare lead wire 222. The solder sphere 290 covers the wire dense part 243 at the tip end 231 of the conductive terminal 230 and the leading end portion of the lead wire 222.

Since no oxide layer nor space is formed between the conductive terminal 230 and silver solder 291, the terminal 230 and the silver solder 291 are in intimate contact with each other in the state that the tip end portion 231 of the conductive terminal 230 is embraced in the silver solder 291. Thus, the terminal 230 and the silver solder 291 are steadily united with each other.

The leading end portion 224 of the lead wire 222 is also embraced in the silver solder 291. Since the covering 242 is removed from the leading end portion 224 of the lead wire 222, the core wire 241 of the lead wire 222 is in intimate contact with the silver solder 291 without forming an oxide layer or space between the core wire 241 and the silver solder 291.

The silver solder 291 having a high melting point and strong associative strength ensures the electrical connection of the lead wire and the terminal while ensuring high anti-vibration and heat-resistant properties and excellent electric conductivity. Therefore, the relay coil having the terminal structure secured by the silver solder according to the present invention is very durable, and thus, suitably applicable to various kinds of machinery bringing about vibration, such as automobiles.

In the brazing process, the silver solder 291 is melted and flows downward along the tip end portion 231 of the terminal by its own weight, consequently to assume the shape of a sphere owing to its surface tension. As a result, the solder sphere 290 is formed at the tip end of the terminal 230.

The formation of the solder sphere 290 is observed by using the monitor camera 5. While observing the growth of the solder sphere 290 at the tip end of the terminal 230, the feeding of the thread of soldering metal from the solder roll R is controlled, so that adequate formation of the solder hardened on the terminal can be obtained by comparing the measured data obtained by monitoring the solder sphere 290 grown on the terminal 230 with predetermined data. Thus, the relay coil having an excellently reliable and strong connection structure between lead wires and terminals of the coil can be obtained.

Next, another embodiment of the relay coil produced by the brazing method according to the present invention will be described.

The relay coil in this embodiment is produced by using nonleaded soldering metal instead of the silver solder used in the foregoing embodiment. That is, with the nonleaded solder, the tip end portion of the terminal and the leading end of the lead wire are connected by making use of the brazing method described above according to the invention.

The nonleaded solder is made of tin and copper alloy and contains flux from the outset. For example, it is preferable to use the wire-like nonleaded solder of diameter about 0.5 mm, which has a melting point of about 300°C. The nonleaded solder is lower in melting point than the silver solder as noted above. Accordingly, in brazing with the nonleaded solder, it is desirable to make the distance between the gas torch and the conductive terminal shorter than that in brazing with the silver solder. The distance between the gas torch and the conductive terminal is adequately adjusted by use of the monitor camera and the controller as described above.

The nonleaded solder is supplied to the terminal round which the lead wire is twined after preheating the terminal by the gas flame shot out from the gas torch. While shooting the gas flame to the united terminal and lead wire, the nonleaded solder is pushed against the united terminal and lead wire heated by the gas flame, thus to melt and assume the shape of a sphere at last.

Within the solder sphere thus formed at the tip end of the terminal, the bare core wire at the leading end of the lead wire is securely hardened along with the terminal, so that the reliable connection between the lead wire and the terminal can be established.

The relay coil was actually produced by the brazing method according to the present invention. The relay coil 200 produced has the conductive terminals 230 each of a phosphor bronze rod of 0.5 mm in diameter, which are each composed of a coated lead wire 222 made of copper and having a diameter of 0.05 mm and a covering of polyurethane having a thickness of 0.0025 mm. There was used silver solder having a diameter of 0.3 mm.

In the produced relay coil, the terminal and lead wire were firmly connected with each other by the hardened silver solder so as to endure hard use. The leading end of the lead wire was infallibly burned down to expose the core wire of the lead wire.

As is apparent from the foregoing description, reliable connection of the terminal and the lead wire, which is formed by the brazing method according to the present invention, can be securely established with high joining strength. The connection obtained by the invention can withstand high temperature and severe vibration and shock. In brazing the coated lead wire to the terminal of the relay coil by the brazing method of the invention, since the coating of the coated lead wire is destroyed in a relative short time by heat of the flame shot out from the gas torch, contamination and environmental pollution can be prevented.

Furthermore, the brazing method according to the invention enables an precise pinpoint blazing, thus making it possible to produce or process minute mechanical or electric component parts with high accuracy. Specifically, mechanical or electric component parts such as relay coils produced by the brazing method of the invention are suitably applicable to various kinds of machinery bringing about vibration, such as automobiles.

## Claims

1. A brazing method comprising placing a work piece (W) and a gas torch (2) at prescribed working positions, shooting a thin gas flame (F) from said gas torch toward a work piece at a pinpoint, and supplying a thread of soldering metal (B) straight to said work piece (W) while heating said work piece with said gas flame (F) to melt said soldering metal, thereby to braze said soldering metal to said work piece.

2. The brazing method set forth in claim 1, wherein inert gas (G) is blown against a basal portion of said work piece (W).

3. The brazing method set forth in claim 1, wherein said work piece (W) is held vertically so as to allow said soldering metal (B) melted by said gas flame (F) to flow downward by its own weight and assume a sphere shape at a tip end of said work piece (W).

4. The brazing method set forth in claim 3, wherein inert gas (G) is blown against a basal portion of said work piece (W).

5. A brazing device comprising a holder (1) for supporting a work piece (W), a gas torch (2) for shooting out a thin gas flame (F) to said work piece to heat said work piece at a pinpoint, and a solder supplying mechanism (6) for supplying and moving a thread of soldering metal (B) to and fro relative to said work piece.

6. The brazing device set forth in claim 5, further comprises a gas supplying system (3) connected to said gas torch (2) to generate and feed combustion gas to said gas torch (2).

7. The brazing device set forth in claim 6, wherein said gas supplying system (3) comprises an oxygen-hydrogen generator (31) for generating oxygen and hydrogen, and a mixer (32) for mixing said oxygen and hydrogen fed from said oxygen-hydrogen generator with methyl alcohol vapor.

8. The brazing device set forth in claim 5, wherein said work piece (W) is held vertically by said holder (1) so as to allow said soldering metal (B) melted by said gas flame (F) to flow downward by its own weight and assume a sphere shape at a tip end of said work piece (W).

9. A brazing device comprising a holder (1) for supporting a work piece (W), a gas torch (2) for shooting out a thin gas flame (F) to said work piece (W) to heat said work piece (W) at a pinpoint, a moving mechanism for moving said gas torch to adjust the work piece (W) and the gas torch (2) in position, a monitor camera (5) for measuring the positions of said work piece (W) and gas torch (2), a controller (9) linked to said moving mechanism, and a solder supplying mechanism for supplying and moving a thread of soldering metal (B) to and fro relative to said work piece (W).

10. The brazing device set forth in claim 9, further comprises a gas supplying system (3) connected to said gas torch (2) to generate and feed combustion gas to said gas torch.

11. The brazing device set forth in claim 10, wherein said gas supplying system (3) comprises an oxygen-hydrogen generator (31) for generating oxygen and hydrogen, and a mixer (32) for mixing said oxygen and hydrogen fed from said oxygen-hydrogen generator with methyl alcohol vapor.

12. The brazing device set forth in claim 9, wherein said work piece (W) is held vertically by said holder (1) so as to allow said soldering metal (B) melted by said gas flame (F) to flow downward by its own weight and assume a sphere shape at a tip end of said work piece (W).

13. The brazing device set forth in claim 10, wherein said work piece (W) is held vertically by said holder (1) so as to allow said soldering metal (B) melted by said gas flame (F) to flow downward by its own weight and assume a sphere shape at a tip end of said work piece (W).

14. The brazing device set forth in claim 9, wherein growth of said soldering metal (B) melted and shaped in a sphere at a tip end of said work piece (W) is observed by said monitor camera (5) and controlled on the basis of measured positional data given by said monitor camera (5) in comparison with predetermined positional data.

15. The brazing device set forth in claim 9, further comprising a gas supplying system (3) for directing inert gas (G) toward a basal portion of said work piece (W).

16. A relay coil comprising a coated lead wire (Wb; 222) wound on a bobbin (210) and having wire end portions twined round terminals (230) provided on said bobbin, said wire end portions being brazed to said terminals by pinpoint shooting a thin gas flame (F) toward each of said terminals, and supplying a thread of soldering metal (B) straight to the respective terminals (230) while heating the terminals with the gas flame (F) to melt said soldering metal.

17. The relay coil set forth in claim 16, wherein said terminal (230) and wire end portion of said lead wire (Wb; 222) are embraced within said soldering metal (B) hardened and shaped in a sphere at a tip end of said terminal (230).

18. The relay coil set forth in claim 17, wherein said soldering metal (B) is silver solder or nonleaded solder.

19. A method for producing a relay coil having a lead wire (Wb; 222) and conductive terminals (230), comprising twining each of leading ends of said lead wire round each of said conductive terminals (230), placing said relay coil and a gas torch (2) at prescribed brazing positions, pinpoint shooting a thin gas flame (F) from said gas torch (2) toward said terminal round which said leading end of said lead wire is twined, and supplying a thread of soldering metal (B) straight to said conductive terminal while heating said terminal with said gas flame (F) to melt said soldering metal (B), thereby to braze said soldering metal to said terminal with said lead wire.

20. The method set forth in claim 19, wherein said soldering metal (B) is silver solder.

21. The method set forth in claim 19, wherein said soldering metal (B) is nonleaded solder.

22. A method for producing a relay coil having a lead wire (Wb; 222) coated with a covering and conductive terminals (230), comprising twining each of leading ends of said lead wire round each of said conductive terminals (230), placing said relay coil and a gas torch (2) at prescribed brazing positions, pinpoint shooting a thin gas flame (F) from said gas torch (2) toward said terminal round which said leading end of said lead wire is twined to burn away said covering of said lead wire, and supplying a thread of soldering metal (B) straight to said conductive terminal while heating said terminal with said gas flame (F) to melt said soldering metal (B), thereby to braze said soldering metal to said terminal with said lead wire.

23. The method set forth in claim 22, wherein said relay coil is held with said terminals (230) directed downward so as to allow said soldering metal (B) melted by said gas flame (F) to flow downward by its own weight and assume a sphere shape at a tip end of each of said terminals.

24. The method set forth in claim 22, wherein said soldering metal (B) is silver solder or nonleaded solder.
